# FASCICULE DE BREVET EUROPEEN

(11) **EP 1 174 381 B1**
(45) Date de publication et mention de la délivrance du brevet: **24.06.2009**
(21) Numéro de dépôt: 01401969.9
(22) Date de dépôt: 23.07.2001
(51) Int. Cl.: B66B 11/02, B66B 11/00, B66B 13/30, B66B 5/02

(54) **Installation d'ascenseur pourvue d'un niveau supérieur à hauteur réduite**
Aufzugsanlage mit verminderter Höhe des Schachtkopfes
Lift plant with an high reduced shaft head room

(30) Priorité: 21.07.2000 FR 0009598
(43) Date de publication de la demande: 23.01.2002
(73) Titulaire: Sodimas, 26600 Pont-de-l'Isère (FR)
(72) Inventeur: Arnoult, Serge, 07300 Tournon sur Rhone (FR)
(74) Mandataire: Roger, Walter

(56) Documents cités:
- EP-A- 0 870 722
- WO-A-99/43596
- US-A- 4 043 430
- US-A- 5 971 109

## Description

La présente invention concerne une nouvelle conception d'installation d'ascenseur qui permet de réduire la hauteur entre le plafond de la gaine et le toit de la cabine, lorsque celle-ci est à l'arrêt au niveau supérieur.

Actuellement, cette hauteur ne peut pas être réduite à moins de 3 400 à 3 600 mm selon la vitesse de la cabine, cette distance étant nécessaire pour permettre à un technicien de se tenir debout sur le toit de la cabine afin d'effectuer les opérations de maintenance sur les équipements électriques qui sont fixés sur le toit de la cabine ou dans la gaine, tout en gardant au-dessus de lui une distance de sécurité. Pour avoir une telle hauteur, il est nécessaire de construire un édicule sur la terrasse du bâtiment ou d'édifier un étage supplémentaire pour y loger les locaux techniques. Mais ces solutions sont naturellement fort coûteuses et portent atteinte à l'esthétique du bâtiment.

EP-A-0 870 722 décrit une installation d'ascenseur dont la cabine présente sur son toit une trappe d'inspection. Aucune boîte de révision avec une partie de masquage de sécurité empêchant l'utilisation de cette boîte n'est prévue dans le toit de cabine.

L'invention vise à remédier à ces inconvénients et propose une installation d'ascenseur ayant un certain nombre de caractéristiques techniques qui, associées entre elles, permettent de réduire de façon conséquente la hauteur du dernier niveau du bâtiment, tout en respectant la sécurité des usagers et des techniciens. Grâce à ces mesures, on peut réduire cette hauteur à environ 2 600 mm ou à environ 2 800 mm selon la vitesse de la cabine.

L'invention concerne donc une installation d'ascenseur conforme à la revendication 1.

Sur ledit toit est fixée, à proximité d'un bord de la trappe d'inspection, une boîte de révision grâce à laquelle le technicien peut déplacer la cabine jusqu'à ce qu'il se mette au niveau de l'un ou l'autre des composants à inspecter fixés en gaine. Ladite trappe comporte une portion de masquage qui rend inaccessible la boîte de visite à une personne qui serait montée par infraction sur le toit de la cabine, à travers l'une des portes palières de l'installation.

Grâce à ces caractéristiques, il devient possible d'effectuer toutes les opérations de maintenance en opérant depuis l'intérieur de la cabine. Pour cette raison déjà, la hauteur du niveau supérieur du bâtiment peut être réduite d'au moins un mètre par rapport aux installations d'ascenseurs traditionnelles où le technicien devait monter sur le toit de la cabine.

Selon les normes en vigueur, on doit garantir une distance de sécurité de 500 mm environ entre le plafond de la gaine et le toit de la cabine, lorsque celle-ci est à l'arrêt à son niveau supérieur. Plus exactement, cette distance est comptée à partir du sommet des éléments qui se trouvent sur le toit de la cabine. Par exemple, dans le cas des installations d'ascenseurs où la cabine est fixée dans un étrier ou arcade, la distance de sécurité doit être comptée à partir du sommet des traverses d'étrier et des renforts qui sont fixés sur le toit de la cabine. Afin de conserver ladite distance de sécurité, il est nécessaire de surélever le plafond de la gaine de la hauteur de ces traverses et renforts, ce qui augmente d'autant la hauteur du dernier niveau.

L'invention vise également à remédier à cet inconvénient et à cet effet, elle a pour objet une installation d'ascenseur dans laquelle la cabine n'est pas fixée dans un étrier, comme c'est le cas dans les ascenseurs classiques, mais est directement suspendue aux câbles de traction du système d'entraînement. Une telle cabine ne comporte plus sur son toit de traverses et de renforts, de sorte que la distance de sécurité peut être comptée à partir de la surface supérieure du toit. Ceci contribue à réduire également la hauteur du niveau supérieur.

De cette réduction de hauteur, découle encore un autre avantage important. L'accès à la machine de l'ascenseur qui se trouve à la partie la plus haute de la gaine, devient beaucoup plus aisé, car on peut désormais l'atteindre en se tenant debout sur le palier du dernier niveau, à travers une ouverture formée sur la façade de la porte palière, à hauteur d'homme. Au contraire, dans les installations d'ascenseurs traditionnelles où la hauteur du dernier niveau est de 3 800 mm, la machine ne peut être atteinte qu'en montant sur une échelle posée sur le palier.

Selon une autre caractéristique de l'invention, l'accès à la machine et aux différents équipements électriques qui sont montés à la partie supérieure de la gaine se fait à travers un portillon d'accès placé latéralement par rapport à la porte palière du dernier niveau. Avantageusement, ledit portillon est monté coulissant entre une position fermée où il obture une ouverture se trouvant en regard de la machine et des équipements électriques, et une position ouverte où il est escamoté derrière un panneau de façade de la porte palière et découvre ainsi ladite ouverture.

Par mesure de sécurité, à l'arrière du portillon est montée une plaque de protection qui, lorsque le portillon est ouvert, obstrue la partie inférieure de l'ouverture afin d'empêcher la chute accidentelle d'objets, la machine et les équipements électriques montés à la partie supérieure de la gaine pouvant être atteints à travers la partie découverte de l'ouverture.

Les équipements électriques comprennent une armoire de manoeuvre montée coulissante sur des rails horizontaux et qui peut donc être sortie hors de la gaine, à travers ladite ouverture, pour être amenée sur le palier du niveau supérieur et une armoire fixe contenant les composants qui commandent la coupure du courant.

Avantageusement, l'armoire de manoeuvre est fixée sur la paroi de la gaine à un niveau juste supérieur à celui du bord supérieur de la plaque de protection, l'armoire fixe est fixée à un niveau supérieur à celui de l'armoire coulissante et la machine est fixée au-dessus du niveau de l'armoire fixe.

De façon connue en soi, la machine comprend un treuil muni d'un frein et d'une poulie de traction autour de laquelle s'enroulent les câbles de traction. Afin de permettre le libre passage de brins verticaux des câbles de traction, la machine est fixée à l'arrière des deux armoires, et se trouve donc plus éloignée de l'ouverture que les armoires.

Cette implantation étagée facilite grandement les opérations de dépannage de secours en vue d'extraire les passagers de la cabine lorsque celle-ci est en panne entre deux étages. Ces opérations peuvent être effectuées depuis le dernier palier, portillon ouvert, ce qui permet d'accéder aux différentes possibilités de dépannage, de visualiser en permanence la position de la cabine et de maîtriser la dérive de la cabine, comme on l'expliquera en détail par la suite.

On décrira à présent plus en détail un mode de réalisation de l'invention, à titre d'exemple non limitatif, en regard des dessins annexés dans lesquels :
la figure 1 est une vue en coupe verticale d'une installation d'ascenseur selon l'invention montrant un technicien en position à travers une trappe formée dans le toit de la cabine, celle-ci étant en position haute ;
la figure 2 est une vue en perspective partielle d'en haut du toit de la cabine, la trappe étant fermée ;
la figure 3 est une vue analogue à la figure 1 montrant un technicien opérant à travers la trappe ;
la figure 4 est une vue en perspective avec arrachements partiels de l'installation d'ascenseur, à partir du palier supérieur, le portillon étant ouvert ;
la figure 5 est une vue en élévation de la porte palière du palier supérieur, portillon ouvert ; et
la figure 6 est une vue en coupe suivant la ligne VI-VI de la figure 5.

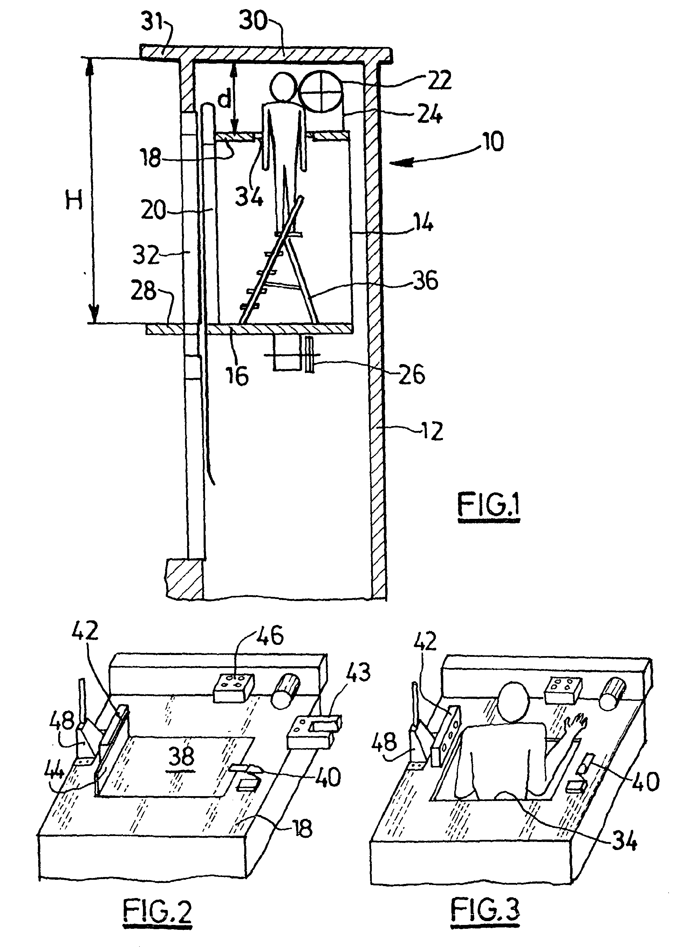

On se réfèrera tout d'abord à la figure 1 qui représente très schématiquement une installation d'ascenseur 10 selon l'invention. L'installation d'ascenseur comprend, de façon connue en soi, une gaine 12 dans laquelle se déplace verticalement une cabine 14. Celle-ci comprend un plancher 16, un toit 18 et une porte de cabine 20. La cabine est entraînée du mouvement par une machine d'ascenseur, dont on n'a représenté que la poulie d'entraînement 22 pour ne pas encombrer la figure. Les câbles de traction 24 sont moufflés sur des poulies 26 montées sous la cabine et sur un contrepoids, non représenté. La figure 1 montre la cabine à l'arrêt au dernier niveau, dont on a représenté le palier 28, le plafond supérieur 31 et la porte palière 32.

Conformément à l'invention, la hauteur H du palier supérieur est réduite à une valeur aussi basse qu'environ 2 800 mm ou même 2 600 mm, selon la vitesse de la cabine, alors que dans les installations traditionnelles, cette hauteur est de l'ordre de 3 800 mm ou 3 600 mm respectivement. Ce résultat est obtenu grâce aux caractéristiques qui vont être expliquées ci-après en détail.

Tout d'abord, selon l'invention, les opérations de maintenance sont effectuées depuis l'intérieur de la cabine, à travers une ouverture 34 formée dans le toit 18 de la cabine. Pour cela, le technicien doit monter sur un escabeau 36 qui est posé sur le plancher 16 de la cabine et faire passer son corps à travers l'ouverture 34 jusqu'à hauteur de la taille. Cette position permet déjà de réduire la hauteur du niveau supérieur d'au moins un mètre par rapport aux installations classiques où le technicien se mettait debout sur le toit de la cabine.

L'ouverture 34 est normalement obturée par une trappe 38 (figure 2) qui est verrouillée au moyen d'un verrou électrique 40 que l'on peut commander depuis l'intérieur de la cabine. Le long de l'un des bords de l'ouverture est fixé un boîtier de visite 42 qui est muni d'un bouton de montée, d'un bouton de descente et d'un bouton de stop. Grâce à ce boîtier, le technicien peut amener la cabine au niveau de l'un des équipements électriques, par exemple l'élément 43, qui sont fixés dans la gaine en vue de les inspecter.

La trappe 38 est munie sur son bord qui est adjacent au boîtier de visite d'un rebord vertical 44 qui vient masquer lesdits boutons lorsque la trappe est en position fermée. Les boutons ne peuvent alors pas être actionnés accidentellement par une personne qui serait montée par effraction sur le toit de la cabine à travers une porte palière, sans ouvrir la trappe.

Sur le toit de la cabine sont également fixés un opérateur de porte 46 et un coulisseau de cabine 48 qui se trouvent également à portée de la main du technicien.

Comme le montre la figure 1, la cabine 14 n'est pas montée sur un étrier, comme il est habituel dans les installations d'ascenseurs classiques, mais elle est directement suspendue aux câbles de traction 24. On comprendra l'avantage apporté par cette caractéristique, dans le cadre de l'idée de base de l'invention qui est de réduire la hauteur du niveau supérieur, en rappelant que dans une cabine montée dans un étrier, les deux bras verticaux de l'étrier sont assemblés sur le dessus du toit de la cabine par des traverses, elles-mêmes reliées par des renforts. Ces traverses et renforts sont constitués par des profilés métalliques ayant plusieurs centimètres de hauteur. On rappelle également que, pour des raisons de sécurité, la norme prévoit que l'on doit maintenir une distance de sécurité entre le toit de la cabine en position haute et le plafond de la gaine égale à environ 500 mm. Cette distance doit être comptée à partir des traverses et renforts.

Du fait que la cabine selon l'invention ne comporte pas d'étrier et donc pas de traverses et renforts sur son toit, la distance de sécurité d sera comptée à partir de la surface supérieure du toit, ce qui est une raison supplémentaire pour réduire la hauteur H du niveau supérieur.

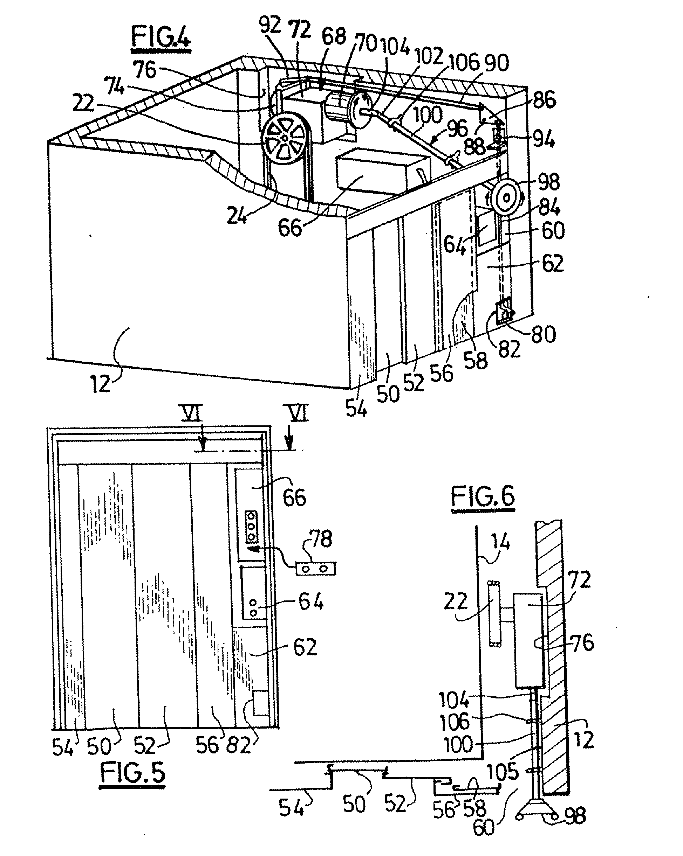

On se réfèrera à présent aux figures 4 à 6 qui illustrent d'autres avantages de l'installation de l'invention obtenus grâce à la réduction de la hauteur du dernier niveau.

La figure 4 montre la porte palière du dernier niveau. Cette porte palière comprend deux vantaux coulissants 50, 52 et deux panneaux de façade 54, 56 derrière lesquels les vantaux s'escamotent lorsqu'ils sont en position ouverte. Selon l'invention, il est prévu latéralement au panneau 56, un portillon d'accès 58 qui est monté coulissant entre une position ouverte où il s'escamote derrière ledit panneau et découvre ainsi une ouverture 60 qui donne sur l'intérieur de la gaine (figures 4 et 5) et une position fermée où il obture ladite ouverture.

La partie inférieure de l'ouverture 60 est fermée en permanence par une plaque de protection fixe 62 qui sert à empêcher tout risque de chute d'objets ou d'animaux dans la gaine. Lorsque le portillon est ouvert, seule la partie supérieure de l'ouverture située au-dessus de la plaque de protection est découverte.

Sur la paroi de la gaine est fixée, légèrement au-dessus du bord supérieur de la plaque de protection 62, une armoire de manoeuvre 64 qui est montée coulissante horizontalement depuis une position rétractée où elle se trouve à l'intérieur de la gaine et une position sortie où elle se trouve entièrement sur le palier. Légèrement au-dessus de l'armoire de manoeuvre est fixée une armoire fixe 66 contenant les composants qui commandent la coupure du courant. Encore au-dessus de l'armoire fixe est montée une machine d'ascenseur 68. Celle-ci comprend un moteur 70 qui entraîne un treuil 72 muni d'une poulie d'entraînement 22 et d'un frein 74. La machine est partiellement insérée à l'intérieur d'une niche borgne 76 construite sur la paroi de la gaine, seule une partie de son épaisseur débordant hors de la niche dans l'espace compris entre la cabine et la paroi de la gaine.

Grâce à la disposition étagée des armoires 64, 66 et de la machine 68, un technicien peut accéder aux deux armoires et à la machine, depuis le palier à travers le portillon ouvert et peut ainsi faire sortir l'armoire coulissante 64 pour qu'elle soit exploitable du palier, ou couper le courant en cas d'incident grave, ou contrôler le régulateur de vitesse ou encore manoeuvrer la cabine d'ascenseur dans le cas où elle s'est bloquée entre deux étages.

Selon la panne qui s'est produite, la manoeuvre du dépannage de secours peut se faire selon l'une des trois procédures suivantes :
1. si la cabine est bloquée et que l'énergie électrique est disponible, on utilise un boîtier de commande 78 que l'on branche sur l'armoire fixe 66 et l'on déplace ainsi la cabine jusqu'à l'amener au niveau souhaité ;
2. si la cabine est bloquée et que l'énergie électrique est absente, on commande manuellement le desserrage du frein 74 du moteur. A cet effet, l'installation comprend une pédale de frein 80 qui fait saillie sur le palier à travers une ouverture 82 formée à la partie inférieure de la plaque de protection 62. Cette pédale est reliée au frein par une transmission mécanique qui peut être de tout type approprié. On a représenté sur la figure 4 un exemple de transmission qui comprend une tige verticale 84 dont les extrémités sont reliées à la pédale de frein et à une pièce de renvoi 86 montée pivotante autour d'un axe 88. Cette pièce transforme le mouvement vertical de la tige 84 en un mouvement horizontal d'une tringle horizontale 90 qui est articulée à ses extrémités sur la pièce de renvoi et sur une biellette 92 de commande du frein. Lorsqu'on appuie sur la pédale avec le pied, on provoque le desserrage du frein, de sorte que la cabine dérive à faible vitesse dans le sens du déséquilibre. Au moment où elle arrive au niveau d'un étage, ce que l'on détecte grâce à un repère de niveau placé sur les câbles, on relâche la pédale de frein 80. Un ressort de rappel 94 ramène alors le mécanisme d'entraînement à sa position initiale où le frein est serré ;
3. si l'énergie est absente et qu'il y a équilibre parfait entre la cabine et le contrepoids, la pédale de frein seule est inefficace, car la cabine ne dérivera pas. Dans ce cas, on utilisera un volant de manoeuvre 96 qui comprend un volant 98 au centre duquel est articulée une bielle 100 se terminant par une portion de liaison 102. A l'utilisation, le technicien accroche ladite portion de liaison à l'arbre 104 du moteur 70, desserre le frein 74, puis il agit sur le volant 98 pour entraîner la cabine dans le sens voulu.

On comprend à présent que pour permettre l'utilisation du volant de manoeuvre, il a fallu revoir la conception des armoires 64 et 66 et leur disposition pour que la machine 68 soit accessible à travers l'ouverture 60. Jusqu'à présent, ces armoires étaient volumineuses et masquaient la machine pour un technicien se trouvant sur le palier. En réduisant leur volume et en les fixant selon une disposition étagée, on est arrivé à dégager un espace permettant de voir directement la machine et de diriger l'extrémité de la bielle 100 pour l'accrocher sur l'arbre du moteur.

Il est clair également que c'est grâce au fait que la hauteur du dernier niveau a été réduite que l'accès à l'arbre 104 du moteur peut se faire en se tenant debout sur le palier, sans avoir à grimper sur une échelle.

On peut encore dire que la présence de la niche 76 contribue également à faciliter l'opération d'accrochage de la bielle 100 à l'arbre du moteur. En effet, comme le montre la figure 6, pour manoeuvrer le volant sans effort, il est souhaitable que la bielle 100 soit parallèle à la paroi 105 de la gaine et soit à la même faible distance de ladite paroi que l'arbre 104. Avantageusement, on peut s'aider à guider la bielle en la faisant passer dans un ou deux anneaux 106 ouverts plantés sur la paroi de la gaine et disposés de manière que l'axe de leur ouverture soit confondu avec l'axe de dépannage. La prévision de la niche 76 permet de rapprocher l'axe de l'arbre 104 de la paroi 105 de la gaine.

Le montage du portillon 58 en mode coulissant permet une ouverture beaucoup plus simple et confère une plus grande sécurité à l'installation par rapport au cas où le portillon était démontable. Avantageusement, l'ouverture du portillon peut se faire en deux temps : un temps où l'on entrebâille l'ouverture afin d'accéder aux boutons de commande des armoires et un second temps où le portillon s'escamote entièrement derrière le panneau 56 afin de dégager toute l'ouverture 60 pour pouvoir extraire l'armoire coulissante 64.

## Revendications

1. Installation d'ascenseur, dont la cabine (14) de l'ascenseur présente sur son toit (18) une trappe d'inspection (34) à travers laquelle un technicien, monté sur un escabeau (36) qui est posé sur le plancher de la cabine, peut faire passer son corps jusqu'à la taille, pour effectuer des opérations de maintenance, ladite trappe étant fermée pendant le service par des moyens de verrouillage (40) dont le déverrouillage peut être commandé depuis l'intérieur de la cabine, **caractérisée en ce que** sur le toit de la cabine est fixée, à proximité d'un bord de la trappe d'inspection, une boîte de révision (42) grâce à laquelle le technicien peut déplacer la cabine jusqu'à ce qu'il se mette au niveau de l'un ou l'autre des composants à inspecter fixés en gaine et **en ce que** ladite trappe comporte une portion de masquage (44) qui rend inaccessible la boîte de révision à une personne qui serait montée par infraction sur le toit de la cabine à travers l'une des portes palières (32) de l'installation.

2. Installation d'ascenseur selon la revendication 1, **caractérisée en ce que** la cabine (14) n'est pas fixée dans un étrier mais est suspendue directement aux câbles de traction (24) du système d'entraînement, la cabine présentant de ce fait un toit lisse (18), de sorte que la distance de sécurité (d) peut être comptée à partir de la surface supérieure dudit toit.

3. Installation d'ascenseur selon la revendication 1, du type comprenant une machine d'entraînement (68) et différents équipements électriques (64, 66) qui sont montés à la partie supérieure de la gaine (12) de l'ascenseur, **caractérisée en ce que** l'accès à ladite machine et auxdits équipements se fait à travers une ouverture (60) placée latéralement par rapport à la porte palière (52) du dernier niveau et qui est fermée par un portillon ouvrable (58).

4. installation d'ascenseur selon la revendication 3, **caractérisée en ce que** ledit portillon est monté coulissant entre une position fermée où il obture ladite ouverture (60) et une position ouverte où il est escamoté derrière un panneau de façade (56) de la porte palière et découvre ainsi ladite ouverture.

5. Installation d'ascenseur selon la revendication 3, **caractérisée en ce que**, par mesure de sécurité, à l'arrière du portillon est montée une plaque de protection (62) qui obstrue la partie inférieure de l'ouverture (60) afin d'empêcher la chute accidentelle d'objets lorsque le portillon est ouvert, la machine (68) et lesdits équipements électriques (64, 66) pouvant être atteints à travers la partie découverte de l'ouverture.

6. Installation d'ascenseur selon la revendication 3, **caractérisée en ce que** les équipements électriques comprennent une armoire de manoeuvre (64) montée coulissante sur des rails horizontaux et qui peut être sortie hors de la gaine (12) à travers ladite ouverture pour être amenée sur le palier (28) du niveau supérieur et une armoire fixe (66) contenant les composants qui commandent la coupure du courant et **en ce que** l'armoire de manoeuvre est fixée sur la paroi de la gaine à un niveau supérieur à celui du bord supérieur de la plaque de protection (62), l'armoire fixe est fixée à un niveau supérieur à celui de l'armoire coulissante et la machine est fixée au-dessus du niveau de l'armoire fixe, cette implantation étagée permettant d'accéder à la machine sans que les armoires s'interposent.

7. Installation d'ascenseur selon l'une des revendications 3 à 6, **caractérisée en ce que** ledit portillon (58) peut occuper une position entrebaîllée, intermédiaire entre la position fermée et la position entièrement ouverte, afin de permettre l'accès aux boutons de commande des armoires (64, 66).

8. Installation d'ascenseur selon la revendication 3, **caractérisée en ce que** la machine d'entraînement (68) comprend un moteur (70) dont l'arbre (104) est parallèle à la paroi (105) de la gaine sur laquelle la machine est fixée, ledit moteur entraînant un treuil (72) muni d'une poulie d'entraînement (22) et d'un frein (74), ladite machine étant partiellement insérée à l'intérieur d'une niche borgne (76) construite sur ladite paroi de la gaine, de manière que seule une partie de son épaisseur déborde hors de la niche dans l'espace compris entre la cabine (14) et la paroi (105) de la gaine, et que ledit arbre (104) se trouve à faible distance de cette paroi.

9. Installation d'ascenseur selon la revendication 8, **caractérisée en ce que** pour effectuer un dépannage de secours en l'absence d'énergie électrique, on desserre le frein (74) par l'intermédiaire d'un mécanisme de transmission (96)commandable depuis le dernier palier à travers l'ouverture (60) et on laisse dériver la cabine jusqu'à ce qu'elle arrive au niveau d'un palier.

10. Installation d'ascenseur selon la revendication 9, **caractérisée en ce que** ledit mécanisme de transmission comprend une pédale de frein (80) qui fait saillie sur le palier à travers une ouverture (82) formée à la partie inférieure de la plaque de protection (62), une tige verticale (84) reliée à la pédale de frein et dont l'extrémité supérieure est articulée sur une pièce de renvoi (86) montée pivotante autour d'un axe (88), et une tringle horizontale (90) qui est articulée à ses extrémités sur la pièce de renvoi et sur une biellette (92) de commande du frein.

11. Installation d'ascenseur selon la revendication 8, **caractérisée en ce que** pour effectuer un dépannage de secours en l'absence d'énergie électrique et en cas d'équilibre entre la cabine et le contrepoids de l'ascenseur, on utilise un volant de manoeuvre (96) qui comprend un volant (98) au centre duquel est articulée une bielle (100) se terminant par une portion de liaison (102), ladite portion de liaison pouvant être accrochée à l'extrémité de l'arbre (104) du moteur (70), tandis que le volant (98) est actionné depuis le palier du niveau supérieur, à travers le portillon ouvert.

12. Installation d'ascenseur selon la revendication 9, **caractérisée en ce que** la bielle (100) est supportée en utilisation par des anneaux (106) fixés sur la paroi de la gaine de manière à ce qu'elle soit parallèle à la paroi (105) de la gaine et à la même faible distance de celle-ci que l'arbre (104) du moteur.

## Claims

1. A lift installation, the lift car (14) of which has on its roof (18) an inspection hatch (34) through which a technician, who is standing on a step-ladder (36) which is placed on the floor of the car, can pass with his body up to the waist so as to carry out maintenance operations, said hatch being closed during operation by locking means (40), the release of which can be controlled from the interior of the car, **characterised in that** a servicing box (42) is secured on the roof of the car in the vicinity of one edge of the inspection hatch and by means of which the technician can cause the car to move until it is disposed level with one or other of the components to be inspected and secured to the shaft, and **in that** said hatch comprises a shielding portion (44) which renders the servicing box inaccessible to a person who might have unlawfully climbed on to the roof of the car through one of the landing doors (32) of the installation.

2. A lift installation according to Claim 1, **characterised in that** the car (14) is not secured in a cradle but is suspended directly from the hoisting cables (24) of a drive system, in which case the car has a smooth roof (18) so that the safety distance (d) can be reckoned to start from the upper surface of said roof.

3. A lift installation according to Claim 1, of the type comprising a drive machine (68) and various electrical equipment (64,66), which are mounted in the upper part of the lift shaft (12), **characterised in that** access to said machine and to said equipment is afforded through an opening (60) which is disposed laterally in relation to the landing door (52) of the last level and which is closed by a gate (58) which can be opened.

4. A lift installation according to Claim 3, **characterised in that** the gate is mounted to slide between a closed position, in which it closes said opening (60), and an open position in which it is concealed behind a front panel (56) of the landing door and thus uncovers said opening.

5. A lift installation according to Claim 3, **characterised in that**, as a safety measure, a protecting plate (62) is mounted on the rear of the gate, which obstructs the lower part of the opening (60) so as to prevent objects from falling accidentally when the gate is open, it being possible for the machine (68) and said electrical equipment (64,66) to be reached through the uncovered part of the opening.

6. A lift installation according to Claim 3, **characterised in that** the electrical equipment comprises a control caret (64) which is mounted to slide on horizontal rails and which can be moved outside the shaft (12) through said opening so as to be brought on to the landing (28) of the upper level and a fixed caret (66) containing the components which the control the current cut-off, and **in that** the control caret is secured on the wall of the shaft at a higher level than that of the upper edge of the protecting plate (62), the fixed caret is secured at a higher level than that of the sliding caret and the machine is secured above the level of the fixed caret, this tiered layout making it possible to gain access to the machine without the carets interfering.

7. A lift installation according to any one of Claims 3 to 6, **characterised in that** said gate (58) can occupy a half-open position which is intermediate between the closed position and the fully open position so as to allow access to the control buttons of the carets (64,66).

8. A lift installation according to Claim 3, **characterised in that** the drive machine (68) comprises a motor (70), the shaft (104) of which is parallel to the wall (105) of the shaft on which the machine is mounted, said motor driving a hoist (72) provided with a drive pulley (22) and a brake (74), said machine being partly inserted inside a blind recess (76) formed in said shaft wall in such a way that only part of its thickness projects outside the recess into the space between the car (14) and the wall (105) of the shaft, and that said shaft (104) is situated at a small distance from this wall.

9. A lift installation according to Claim 8, **characterised in that**, to carry out an emergency repair in the absence of electrical power, the brake (74) is released by means of a transmission mechanism (96) which can be controlled from the last landing through the opening (60) and the car can be diverted until it reaches the level of a landing.

10. A lift installation according to Claim 9, **characterised in that** said transmission mechanism comprises a brake pedal (80) which projects on to the landing through an opening (82) formed in the lower part of the protecting plate (62), a vertical rod (84) connected to the brake pedal and the upper end of which is articulated to a counter-motion member (86) mounted to pivot about an axis (88), and a horizontal rod (90) which is articulated at its ends to the counter-motion member and to a brake-control rod (92).

11. A lift installation according to Claim 8, **characterised in that**, to carry out an emergency repair in the absence of electrical power and if equilibrium exists between the car and the lift counterweight, an operating wheel (96) is used which comprises a handwheel (98), at the centre of which is articulated a connecting rod (100) which ends in a link portion (102), it being possible for said link portion to be coupled to the end of the shaft (104) of the motor (70), whereas the handwheel (98) is actuated from the landing of the upper level, through the open gate.

12. A lift installation according to Claim 9, **characterised in that** the connecting rod (100) is supported in use by rings (106) secured to the shaft wall in such a way that it is parallel to the wall (105) of the shaft and at the same small distance therefrom as the shaft (104) of the motor.

## Patentansprüche

1. Aufzugseinrichtung, deren Aufzugskabine (14) auf ihrem Dach (18) eine Inspektionsklappe (34) aufweist, durch die ein Techniker, der auf einer Trittleiter (36) steht, die auf dem Boden der Kabine aufgestellt ist, seinen Körper bis zur Taille hindurchführen kann, um Wartungsarbeiten durchzuführen,
wobei die Klappe während des Betriebs durch ein Verriegelungsmittel (40) verschlossen ist, dessen Entriegelung von dem Inneren der Kabine aus gesteuert werden kann,
**dadurch gekennzeichnet, dass**
auf dem Dach der Kabine nahe einem Rand der Inspektionsklappe ein Revisionskasten (42) befestigt ist, mit dessen Hilfe der Techniker die Kabine bewegen kann, bis er zu der Höhe der einen oder anderen zu inspizierenden Komponente gelangt, die in dem Schacht angebracht sind, und dass
die Klappe einen Maskierungsabschnitt (44) aufweist, der den Revisionskasten für eine Person unerreichbar macht, die durch eine der Absatztüren (32) der Einrichtung auf das Dach der Kabine gelangt ist.

2. Aufzugseinrichtung gemäß Anspruch 1, **dadurch gekennzeichnet, dass** die Kabine (14) nicht an einem Bügel befestigt ist, sondern direkt an Zugkabeln (24) des Antriebssystems hängt, wobei die Kabine aufgrund dieser Tatsache ein glattes Dach (18) aufweist, so dass der Sicherheitsabstand (d) von der Oberfläche dieses Daches aus gezählt werden kann.

3. Aufzugseinrichtung gemäß Anspruch 1 von der Art, die eine Antriebsmaschine (68) und verschiedene elektrische Vorrichtungen (64, 66) enthält, die in dem oberen Abschnitt des Schachts (12) des Aufzugs angebracht sind, **dadurch gekennzeichnet, dass** der Zugang zu dieser Maschine und zu diesen Einrichtungen über eine Öffnung (60) erfolgt, die seitlich der Absatztüre (52) des letzten Niveaus angeordnet ist und die durch ein öffenbares Türchen (58) verschlossen ist.

4. Aufzugseinrichtung gemäß Anspruch 3, **dadurch gekennzeichnet, dass** das Türchen gleitend angebracht ist zwischen einer geschlossenen Stellung, in der es die Öffnung (60) verschließt, und einer geöffneten Stellung, in der es hinter einem Panel der Fassade (56) der Absatztüre verschwindet und somit die Öffnung enthüllt.

5. Aufzugseinrichtung gemäß Anspruch 3, **dadurch gekennzeichnet, dass** als Sicherheitsmaßnahme hinter dem Türchen eine Sicherheitsplatte (62) angebracht ist, die den unteren Abschnitt der Öffnung (60) versperrt, um das zufällige Herunterfallen von Objekten zu verhindern, wenn die Türe geöffnet ist, wobei die Maschine (68) und die elektrischen Vorrichtungen (64, 66) durch den freigelegten Abschnitt der Öffnung erreicht werden können.

6. Aufzugseinrichtung gemäß Anspruch 3, **dadurch gekennzeichnet, dass**
die elektrischen Vorrichtungen einen Schaltschrank (64), der gleitend auf horizontalen Schienen angebracht ist und der durch die Öffnung aus dem Schacht (12) herausgeführt werden kann, um auf den Absatz (28) des obersten Niveaus gebracht zu werden, und einen festen Schaltschrank (66) enthalten, der die Komponenten enthält, die die Stromabschaltung steuern, und dass
der Schaltschrank an der Wand des Schachtes auf einer Höhe befestigt ist, die höher ist als der Oberrand der Schutzplatte (62),
der feste Schrank auf einer Höhe befestigt ist, die höher ist als diejenige des gleitenden Schranks, und
die Maschine oberhalb der Höhe des festen Schranks angebracht ist,
wobei es diese abgestufte Anordnung ermöglicht, auf die Maschine zuzugreifen, ohne dass die Schränke im Weg sind.

7. Aufzugseinrichtung gemäß einem der Ansprüche 3 bis 6, **dadurch gekennzeichnet, dass** das Türchen (58) eine halb geöffnete Stellung einnehmen kann, die in der Mitte zwischen der geschlossenen Stellung und der ganz geöffneten Stellung liegt, um den Zugriff auf die Steuerknöpfe der Schränke zu ermöglichen.

8. Aufzugseinrichtung gemäß Anspruch 3, **dadurch gekennzeichnet, dass**
die Antriebsmaschine (68) einen Motor (70) enthält, dessen Achse (104) parallel zu der Wand (105) des Schachts ist, an der die Maschine befestigt ist,
wobei der Motor eine Seilwinde (72) antreibt, die mit einer Antriebsrolle (22) und einer Bremse (74) versehen ist,
die Maschine teilweise in das Innere einer Blindnische (76) eingesetzt ist, die an der Wand des Schachts gebildet ist, so dass nur ein Abschnitt ihrer Dicke aus der Nische in den Raum vorsteht, der zwischen der Kabine (14) und der Wand (105) des Schacht liegt, und
die Achse (104) sich in geringem Abstand von dieser Wand befindet.

9. Aufzugseinrichtung gemäß Anspruch 8, **dadurch gekennzeichnet, dass** man zum Durchführen einer Pannenhilfe im Notfall bei Fehlen elektrischer Energie die Bremse (74) mittels eines Übertragungsmechanismus (96) löst, der von dem letzten Niveau aus durch die Öffnung (60) gesteuert werden kann, und die Kabine absinken lässt, bis sie auf der Höhe eines Absatzes ankommt.

10. Aufzugseinrichtung gemäß Anspruch 9, **dadurch gekennzeichnet, dass** der Übertragungsmechanismus enthält:
ein Bremspedal (80), das auf dem Absatz durch eine Öffnung (82) vorspringt, die an dem unteren Abschnitt der Schutzplatte (62) gebildet ist,
eine Vertikalstange (84), die mit dem Bremspedal verbunden ist und deren oberes Ende gelenkig mit einem Rückstellteil (86) verbunden ist, das um eine Achse (88) schwenkbar angebracht ist, und
eine Horizontalstange (90), die an ihren Enden gelenkig mit dem Rückstellteil und mit einem Gestänge (92) zum Steuern der Bremse verbunden ist.

11. Aufzugseinrichtung gemäß Anspruch 8, **dadurch gekennzeichnet, dass** man zum Durchführen einer Pannenhilfe im Notfall bei Fehlen elektrischer Energie und bei einem Gleichgewicht zwischen der Kabine und dem Gegengewicht des Aufzugs ein Manövrierrad (96) verwendet, das ein Handrad (98) enthält, in dessen Mitte gelenkig eine Lenkstange (100) angebracht ist, die in einem Verbindungsabschnitt (102) endet, wobei der Verbindungsabschnitt an dem Ende der Welle (104) des Motors (70) befestigt sein kann, während das Handrad (98) von dem Absatz des letzten Niveaus aus durch das offene Türchen betätigt wird.

12. Aufzugseinrichtung gemäß Anspruch 9, **dadurch gekennzeichnet, dass** die Lenkstange (100) im Betrieb von Ringen (106) gehalten ist, die an der Schachtwand befestigt sind, so dass sie parallel zu der Schachtwand (105) ist und denselben geringen Abstand hat wie die Achse (104) des Motors.
